# FASCICULE DE BREVET EUROPEEN

(11) **EP 1 775 060 B1**
(45) Date de publication et mention de la délivrance du brevet: **02.11.2011**
(21) Numéro de dépôt: 06300991.4
(22) Date de dépôt: 27.09.2006
(51) Int. Cl.: B23K 35/30

(54) **Fil fourré sans laitier pour soudage en position verticale descendante**
Metal cored weld wire for welding in vertical descending position
Metall-Fülldraht zum Lichtbogenschweissen in vertikaler senkender Lage

(30) Priorité: 05.10.2005 FR 0553020
(43) Date de publication de la demande: 18.04.2007
(73) Titulaire: L'AIR LIQUIDE, Société Anonyme pour l'Etude et l'Exploitation des Procédés Georges Claude, 75007 Paris (FR); AIR LIQUIDE WELDING FRANCE, 75007 Paris (FR)
(72) Inventeur: Leduey, Bruno, 95000 Cergy (FR)
(74) Mandataire: Pittis, Olivier

(56) Documents cités:
- EP-A- 1 288 322
- EP-A- 1 676 669
- US-A- 5 192 851
- US-A- 5 225 661

## Description

La présente invention porte sur un fil fourré de soudage du type « sans laitier » et un procédé de soudage à l'arc utilisant un tel fil en polarité négative, particulièrement adapté à un soudage en position verticale descendante.

Les fils fourrés du type « sans laitier » utilisés en soudage à l'arc se composent d'une gaine en métal formée soit à partir d'un feuillard ou feuille métallique, soit à partir d'un tube soudé, et d'un noyau central constitué presque essentiellement de poudres métalliques, couramment appelé fourrage, principalement du fer, des ferroalliages et éventuellement de très petites quantités de poudres minérales contenant des produits ionisants.

Ces fils fourrés sont appelés « sans laitier » ou « à âme métallique » (*metal cored* en anglais).

Pour le soudage en position, ce type de fil fourré lorsqu'il est mis en oeuvre avec une protection gazeuse pendant une opération de soudage en position verticale descendante par transfert en pulvérisation, c'est-à-dire pour de fortes intensités de courant de soudage, est le plus performant en terme de productivité mais sans être totalement satisfaisant.

En effet, l'utilisation de ces fils fourrés « sans laitier » pour des applications en chantiers navals, de poses de pipelines en mer ou sur terre, dans une opération de soudage en position verticale descendante, pose des problèmes de tenue de bain de métal fondu pour les fortes intensités de courant, c'est-à-dire typiquement plus de 200 A environ, et limite donc les performances en terme de productivité, sachant qu'il est habituel de souder avec mise du fil à la polarité positive.

Lors du soudage en position, le facteur limitant la productivité est la vitesse maximum, à forte intensité de courant, pour laquelle le soudeur peut contrôler le bain de métal en fusion pour obtenir le profil du cordon de soudure voulu tout en conservant les bonnes propriétés du métal fondu.

Le problème de tenue de bain pour des vitesses de soudage supérieures à 40 cm/min, du fait d'une trop grande fluidité du métal en fusion, conduit à des risques d'inclusions dans le joint, à une fusion incomplète et à des irrégularités de pénétration. De plus, on constate une faible productivité due, en partie, à une perte de métal qui s'effondre pendant le soudage.

Pour y remédier, il est en général nécessaire d'abaisser l'intensité de soudage jusqu'à obtenir la forme de cordon souhaitée mais ceci se fait au détriment de la productivité.

Toutefois, il faut souligner que certains fils de soudage existants ne permettent pas un tel abaissement d'intensité car cela engendrerait un risque de se situer dans le régime de transfert dit « globulaire », dans lequel la fusion du fil se fait sous forme de grosses gouttes, ce qui contribue à la formation de projections importantes, donc à une détérioration de la qualité du soudage.

En soudage en polarité négative, c'est-à-dire avec pôle négatif de la source de courant relié au fil, l'énergie calorifique sert à fondre le fil plus qu'elle ne réchauffe la tôle. Il est connu que, dans ce cas, le métal en fusion se refroidit plus vite, ce qui est appelé un « bain froid» par les soudeurs La fréquence des gouttes est aussi plus rapide et celles-ci sont donc plus petites.

Cependant, le soudage en polarité négative n'est pas apprécié par les utilisateurs car il conduit à des difficultés de pénétration et à un risque élevé d'inclusions.

Toutefois, cette difficulté rencontrée par les soudeurs est liée à l'utilisation de fils massifs car avec ces fils massifs, pour une intensité donnée, la vitesse de fusion du fil est plus importante lorsque celui-ci est à la polarité négative par rapport à la polarité positive si bien qu'en polarité négative au fil, pour une énergie de soudage donnée (UI/Vs), la proportion du fil électrode dans le métal fondu par rapport au métal de base est plus importante qu'en polarité positive, la pénétration est plus faible et le risque de défaut de soudage de type « collage » augmente. Si ce constat est vrai avec les fils massifs, il ne l'est pas toujours avec les fils fourrés car certains constituants du fourrage peuvent modifier le rapport des vitesses de fusion entre les polarités négative et positive si bien que la réticence des soudeurs à utiliser la polarité négative qui résulte de leur expérience en fil massif n'est pas forcément justifiée avec un fil fourré.

On connaît par ailleurs le document US-A-5,192,851 qui décrit des fils fourrés pour le soudage à l'arc pulsé contenant des composés formant laitier et dont les éléments de remplissage représentent de 15 à 28% de la masse totale du fil.

De là, le problème qui se pose est d'améliorer la productivité d'un procédé de soudage à l'arc utilisant un fil fourré « sans laitier » sous protection gazeuse, notamment lorsque l'assemblage à réaliser se trouve dans une position autre que la position dite « à plat », en particulier lors d'un soudage en position verticale descendante.

Autrement dit, la présente invention vise donc à proposer un fil de soudage amélioré permettant d'obtenir un gain de temps lors de la réalisation du cordon de soudure, une réduction du temps de meulage, une augmentation de la quantité de métal déposé par unité de temps et une diminution du nombre de réparations de la soudure, c'est-à-dire moins de défauts, notamment de projections.

La solution de l'invention est alors un fil fourré de soudage comprenant une enveloppe métallique externe et des éléments de remplissage contenus dans ladite enveloppe métallique,
- lesdits éléments de remplissage contenant du fer et représentant de 8 à 27 % de la masse totale du fil, caractérisé en ce que
- la quantité totale de calcium contenue dans le fil représente de 100 ppm à 0.14% de la masse totale du fil ou de 0.035 % à 1.8 % en poids de la masse des éléments de remplissage.

Selon le cas, le fil fourré de l'invention peut comprendre l'une ou plusieurs des caractéristiques suivantes :
- le calcium provient du métal constitutif du fil fourré et/ou du fourrage du fil fourré.
- la quantité totale de calcium contenue dans le fil représente de 500 ppm à 0.13% de la masse totale du fil, de préférence moins de 0,12% de la masse totale du fil.
- la quantité totale de calcium contenue dans le fil représente moins de 1.7% en poids de la masse des éléments de remplissage.
- l'enveloppe métallique externe est formée d'au moins 90% en poids de fer.
- le calcium est sous forme d'un ou plusieurs alliages métalliques et/ou sous forme minérale.
- les éléments de remplissage représentent de 9 à 22 % de la masse totale du fil, de préférence de 10 à 20%.
- les éléments de remplissage contiennent un ou plusieurs éléments choisis parmi la poudre de fer, les constituants d'éléments désoxydants, les éléments d'alliage et les agents stabilisateurs d'arc.
- il contient de 0.010 % à 0.25 % de carbone (% du poids du fil), 0.10 % à 1.85 % de silicium, 1 % à 2.9% % de manganèse, 0.001 % à 0.03 % de soufre, 0.001 % à 0.1 % d'aluminium, 0.001 % à 0.2 % de titane et/ou 1 à 150 ppm de bore. En particulier, du titane et du bore peuvent être ajouté pour favoriser la formation de ferrite aciculaire et donc améliorer le niveau de résilience de la soudure.
- il contient moins de 2.8% de manganèse, de préférence encore moins de 2.7% de manganèse,
- il contient moins de 0.09% d'aluminium,
- le diamètre de fil est compris entre 0.8 mm et 2.4 mm, de préférence entre 1 et 2 mm.
- les éléments métalliques désoxydants sont choisis parmi Fe-Mn et Fe-Si.
- les éléments d'alliage contiennent du nickel, du chrome et/ou du molybdène. Ceux-ci peuvent être ajouté dans le cas d'un soudage de pièces en acier faiblement allié, voire fortement allié.
- les éléments stabilisateurs d'arc sont choisis parmi Na et K.
- le fil est formé d'un feuillard ou d'un tube rempli d'éléments de remplissage.

L'invention porte aussi sur un procédé de soudage à l'arc sous flux gazeux mettant en oeuvre un fil fourré en polarité négative selon l'invention, en particulier pour un soudage en position verticale descendante.

De préférence, on utilise en tant que flux gazeux un gaz inerte ou un mélange de gaz inertes, tels que de l'argon, de l'hélium ou un mélange argon-hélium, ou un gaz oxydant, tel le CO₂, ou un mélange de gaz inertes et oxydants, tels que de l'argon et/ou de l'hélium avec de l'oxygène et/ou du CO₂.

Un joint de soudure ou métal déposé obtenu par le procédé de soudage de l'invention, c'est-à-dire avec un fil de l'invention, contient :
- du fer,
- de 1 ppm à 50 ppm de calcium, de préférence moins de 30 ppm de calcium,
- de 0.010 % à 0.12 % de carbone,
- de 0.15 % à 1% de silicium,
- de 0.7 à 2 % de manganèse, de préférence moins de 1.9% de manganèse,
- de 0.001 % à 0.025 % de soufre, de préférence moins de 0.020% de soufre pour augmenter le niveau de résilience,
- de 0.001 % à 0.05 % d'aluminium, de préférence moins de 250 ppm d'aluminium, et préférentiellement encore moins de 100 ppm d'aluminium,
- de 0.001 % à 0.08 % de titane, de préférence moins de 0.060% de titane,
- de 1 à 100 ppm de bore, de préférence moins de 80 ppm de bore,
- de 200 à 800 ppm d'oxygène, de préférence moins de 600 ppm d'oxygène et préférentiellement encore moins de 500 ppm d'oxygène, et/ou
- moins de 80 ppm d'azote, de préférence moins de 50 ppm d'azote.

Plus précisément, l'inventeur de la présente invention a mis en évidence que l'addition inhabituelle de calcium sous forme d'alliages métalliques contenant l'élément calcium, tel le silico-calcium, et/ou sous forme minérale comme le carbonate de calcium sous toute forme cristallographique, dolomie, wollastonite, gypse, anorthite, carbonate de calcium et magnésium, borate de calcium, carbonates de calcium, fluorure de calcium, molybdate de calcium, oxalate de calcium, silicates de calcium, siliciure de calcium, sulfates de calcium, sulfure de calcium ou toute autre forme minérale contenant l'élément calcium, dans la composition d'un fil fourré sans laitier conduit à une amélioration significative de la productivité, lors d'une opération de soudage en position verticale descendante avec ce fil mis en polarité négative (pôle négatif du générateur de courant relié au fil) du fait d'une meilleure tenue du bain de soudage, c'est-à-dire du bain de métal en fusion, sans risque de défaut de la soudure.

Un tel fil présente, de plus, un très bon comportement opératoire et une grande facilité d'exécution du cordon de soudage, notamment en terme de pénétration.

Par ailleurs, l'addition de matières minérales, dans les quantités indiquées ci-après, ne conduit pas à une formation d'îlots de silicates plus importante qu'en leur absence.

Il est remarquable aussi que le fait de changer la polarité en conservant la même vitesse de fil ne fasse pas varier l'intensité de soudage (les autres paramètres restant constants), seulement dans le cas des produits concernés par cette invention.

### Exemples

Les essais de soudage suivants ont été effectués sur un acier de type S235JR selon la norme EN 10025 et ayant la composition chimique donnée (% en poids) dans le Tableau 1 suivant (le reste étant essentiellement du fer).

**Tableau 1**

| % | C | Si | Mn | P | S | Ni | Al | Ca (ppm) |
|---|---|---|---|---|---|---|---|---|
| Tôle | 0.14 | 0.21 | 0.73 | 0.009 | 0.005 | 0.031 | 0.042 | 10 |

| | | | | | | | | |
|---|---|---|---|---|---|---|---|---|
| % : par rapport au poids de la tôle | | | | | | | | |

### Exemple 1

Le Tableau 2 décrit l'analyse chimique du métal déposé de chaque échantillon testé dans ce premier groupe pour un soudage en courant continu pôle (+) au fil.

**Tableau 2 : Analyse chimique du métal déposé**

| % | C | Si | Mn | P | S | Ni | Al | Nb | Ti | V | Ca (ppm) | B (ppm) | O (ppm) | N (ppm) |
|---|---|---|---|---|---|---|---|---|---|---|---|---|---|---|
| Fil A | 0.068 | 0.51 | 1.61 | 0.013 | 0.009 | 0.021 | 0.017 | 0.003 | 0.007 | 0.003 | 2 | 4 | 466 | 35 |
| Fil B | 0.064 | 0.42 | 1.47 | 0.010 | 0.013 | 0.040 | 0.023 | 0.002 | 0.009 | 0.005 | 1 | 4 | 506 | 49 |
| Fil C | 0.048 | 0.78 | 1.56 | 0.012 | 0.006 | 0.018 | 0.024 | 0.003 | 0.006 | 0.003 | 2 | 35 | 530 | 57 |

Les fils A à C testés dans cet exemple 1 ne contiennent pas ou très peu de calcium sous forme de résiduels, comme visible dans le Tableau 3 ci-après. En effet, les valeurs données correspondent à ce que l'on rencontre habituellement dans les fils fourrés conventionnels.

**Tableau 3 : Constituants du fil**

| % | C | Si | Mn | P | S | Ni | Al | Nb | Ti | V | Ca (ppm) | B (ppm) |
|---|---|---|---|---|---|---|---|---|---|---|---|---|
| Fil A | 0.16 | 0.72 | 2.15 | 0.015 | 0.015 | 0.02 | 0.07 | 0.005 | 0.03 | 0.004 | 10 | 10 |
| Fil B | 0.14 | 0.57 | 1.96 | 0.012 | 0.018 | 0.02 | 0.09 | 0.005 | 0.06 | 0.007 | 8 | 10 |
| Fil C | 0.09 | 0.93 | 2.13 | 0.020 | 0.016 | 0.05 | 0.1 | 0.005 | 0.04 | 0.004 | 17 | 65 |

Les essais ci-après ont été réalisés à l'aide d'un générateur SAFMIG type 450S commercialisé par LA SOUDURE AUTOGENE FRANCAISE en courant continu pôle (+) au fil avec un gaz de protection composé de 82% d'argon et 18% de CO₂ (% en volume) délivré à un débit de 20 I/min. Les cordons de soudure ont été réalisé à l'aide de fils de diamètre 1.2 mm.

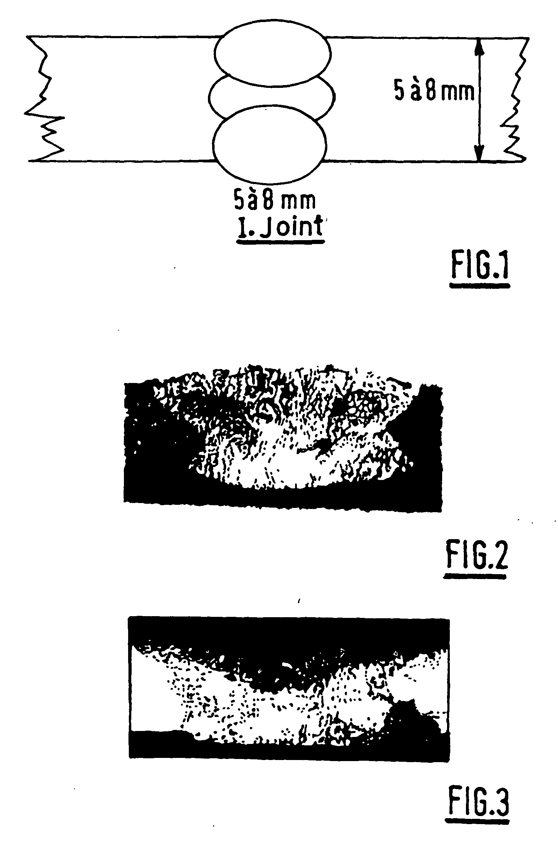

L'essai consiste à assembler par soudage, en position verticale descendante, 2 tôles pré-peintes, de 5 mm d'épaisseur, sans préparation des bords, selon un assemblage dit « en I », c'est-à-dire à bord droit (voir Figure 1) en 3 cordons successifs, c'est-à-dire en réalisant 3 passes de soudage : 1 cordon de pénétration (1^{ère} passe ; cf. Tab. 4) et 1 cordon de remplissage (2^{e} et 3^{e} passes ; cf. Tab. 5) de chaque côté de l'assemblage.

Les paramètres utilisés pour l'exécution de chaque étape du soudage sont donnés dans les tableaux 4 et 5.

**Tableau 4**

| Cordon de pénétration (1^{ère} passe) | Intensité (A) | Tension (V) | Vitesse fil (m/min) | Vitesse de soudage (cm/min) |
|---|---|---|---|---|
| Fil A | 190 | 24 | 4.8 | 56 |
| Fil B | 215 | 24 | 4.8 | 61 |
| Fil C | 215 | 24.5 | 4.8 | 59 |

**Tableau 5**

| Cordons de remplissage (2e et 3e passes) | Intensité (A) | Tension (V) | Vitesse fil (m/min) | Vitesse de soudage (cm/min) |
|---|---|---|---|---|
| Fil A | 240-240 | 27-27.5 | 6.5 | 61 |
| Fil B | 255-260 | 26.5-26.5 | 6.5 | 66 |
| Fil C | 255-270 | 27-25.5 | 6.5 | 58 |

Les résultats obtenus sont consignés dans le Tableau 6 ci-après pour les 3 fils A à C ci-dessus.

**Tableau 6**

| | Fil A | Fil B | Fil C |
|---|---|---|---|
| Ca dans le fil | 10 ppm | 8 ppm | 17 ppm |
| Pénétration | O | X | X |
| Tenue de bain | O | O | X |
| Fusion | O | O | O |
| Projections | O | X | O |
| Mouillage | O | O | O |
| Productivité (Kg /h) | 1.9 | 1.9 | 2.1 |

| | | | |
|---|---|---|---|
| X = bon O = non acceptable : | | | |

Sont considérés comme non-acceptables (O), les fils conduisant à une pénétration insuffisante, une tenue de bain mauvaise (bain qui coule), une fusion fortement crépitante caractéristique d'un arc instable, des projections très nombreuses et un mouillage insuffisant, c'est-à-dire un angle de raccordement du cordon avec la tôle à souder faible.

On constate au vu du Tableau 6 qu'il est très difficile, voire impossible de mener à bien un assemblage de type joint en « I » en polarité positive et en position verticale descendante avec ces fils.

En effet, on constate dans cet exemple 1 que le métal en fusion est très liquide et à tendance à couler. Cette situation rend l'opération extrêmement délicate pour le soudeur. De plus, la passe de pénétration est difficile et l'on rencontre souvent des problèmes d'inclusions de laitier, comme illustré sur la Figure 2 ci-annexée qui est une photographie représentant une coupe macrographique de l'assemblage (joint) obtenu, et des manques de fusion entre le métal de base et le métal déposé, donc conduisant à un joint de soudage de mauvaise qualité (propriétés mécaniques).

Des essais de soudage analogues réalisés avec les fils A à C et en polarité (-), ont conduit à des résultats similaires à ceux obtenus en polarité (+), donc non-acceptables.

### Exemple 2

Cet Exemple 2 vise à démontrer qu'il est tout à fait possible de mener à bien l'exécution de l'assemblage représenté en Figure 1, à condition de jouer sur la teneur en calcium du fil de soudage.

Le Tableau 7 donne l'analyse chimique du métal déposé de chaque fil testé (soudage en courant continu pôle (-) au fil), ainsi que les teneurs en calcium présent dans le métal.

**Tableau 7**

| % | C | Si | Mn | P | S | Ni | AI | Nb | Ti | V | Ca (ppm) | B (ppm) | O (ppm) | N (ppm) |
|---|---|---|---|---|---|---|---|---|---|---|---|---|---|---|
| Fil D | 0.096 | 0.64 | 1.41 | 0.009 | 0.012 | 0.030 | 0.014 | 0.003 | 0.005 | 0.008 | 4 | 11 | 518 | 78 |
| Fil E | 0.026 | 0.73 | 1.72 | 0.012 | 0.010 | 0.029 | 0.016 | 0.002 | 0.018 | 0.004 | 8 | 30 | 550 | 70 |
| Fil F | 0.021 | 0.76 | 1.69 | 0.010 | 0.007 | 0.029 | 0.022 | 0.004 | 0.034 | 0.003 | 10 | 45 | 660 | 73 |

Les fils testés dans cet Exemple 2 contiennent des proportions variables de calcium, comme donné dans le Tableau 8 ci-après, que l'on a volontairement additionné sous forme de silico -calcium (Si-Ca).

**Tableau 8 : Constituants du fil**

| % | C | Si | Mn | P | S | Ni | AI | Nb | Ti | V | Ca (ppm) | B (ppm) |
|---|---|---|---|---|---|---|---|---|---|---|---|---|
| Fil D | 0.22 | 0.9 | 1.8 | .01 | 0.015 | 0.04 | 0.05 | 0.005 | 0.02 | 0.1 | 100 | 25 |
| Fil E | 0.07 | 1 | 2.3 | 0.015 | 0.01 | 0.03 | 0.06 | 0.005 | 0.09 | 0.05 | 1000 | 60 |
| Fil F | 0.05 | 1.1 | 2 | 0.01 | 0.08 | 0.03 | 0.1 | 0.005 | 0.16 | 0.05 | 1500 | 94 |

Les essais de soudage opérés avec ces fils D à F ont été réalisés en soudure d'angle à l'aide d'un générateur SAFMIG type 450S commercialisé par LA SOUDURE AUTOGENE FRANCAISE en courant continu pôle (-) au fil avec un gaz de protection composé de 82% en volume d'argon et 18% de CO₂ avec un débit de 20 I/min.

Comme dans l'Exemple 1, les cordons de soudure ont été réalisés à l'aide de fils de diamètre 1.2 mm et le soudage a été opéré sur des tôles pré-peintes de 5 mm d'épaisseur sans préparation des bords, selon l'assemblage dit « en I » de la Figure 1 et en 3 passes successives comme dans l'Exemple 1.

Les Tableaux 9 et 10 consignent les paramètres utilisés pour l'exécution, en position verticale descendante, de chaque étape du soudage.

**Tableau 9**

| Cordon de pénétration (1^{ère} passe) | Intensité (A) | Tension (V) | Vitesse fil (m/min) | Vitesse de soudage (cm/min) |
|---|---|---|---|---|
| Fil D | 190 | 24 | 4.8 | 51 |
| Fil E | 215 | 22 | 4.8 | 54 |
| Fil F | 205 | 22 | 4.8 | 57 |

**Tableau 10**

| Cordon de remplissage (2^{e} et 3^{e} passes) | Intensité (A) | Tension (V) | Vitesse fil (m/min) | Vitesse de soudage (cm/min) |
|---|---|---|---|---|
| Fil D | 260-260 | 26-26 | 6.5 | 62 |
| Fil E | 290-280 | 22-22.5 | 6.5 | 61 |
| Fil F | 270-260 | 24-24 | 6.5 | 61 |

Les résultats obtenus sont consignés dans le Tableau 11 ci-après pour les 3 fils D à F ci-dessus.

**Tableau 11**

| | Fil D | Fil E | Fil F |
|---|---|---|---|
| Teneur en Ca | 100 ppm | 0.1% | 0.15% |
| Pénétration | X | X | X |
| Tenue de bain | X | X | X |
| Fusion | X | X | ○ |
| Projections | X | X | ○ |
| Mouillage | X | X | X |
| Productivité (Kg/h) | 2.4 | 2.7 | 2.7 |

| | | | |
|---|---|---|---|
| X = bon O = non acceptable | | | |

Les résultats obtenus montrent que l'addition de l'élément calcium selon la présente invention permet d'obtenir l'effet souhaité en soudage à polarité négative.

La soudure ainsi obtenue, visible sur la Figure 3, présente une excellente compacité contrairement à celle de la Figure 2, obtenue avec les fils A à C de l'Exemple 1 (Figure 2).

Le comportement bénéfique du fil de l'invention conduit de ce fait à un gain important de productivité car on obtient une meilleure tenue mécanique du bain de métal en fusion.

D'autre part, dans le Tableau 11, les résultats du comportement du fil F contenant du calcium en quantité dépassant la limite supérieure de la présente invention, c'est-à-dire de plus de 0,14% en calcium, montrent que l'on tend à émettre plus de projections et que la fusion est à nouveau détériorée. Il ne faut donc pas dépasser cette limite supérieure si l'on veut conserver les bénéfices de l'invention.

De plus, des essais complémentaires sur moules (métal hors dilution déposé par les fils) visant a étudier les propriétés mécaniques des joints de soudure ainsi obtenus ont été réalisés par dépôt de métal fondu en 2 passes par couche selon la norme AFNOR NF A 81 - 351 à l'aide d'un générateur SAGMIG 450S en courant continu avec pôle (-) relié au fil de soudage, à une intensité de courant de 265A, une tension de 27V, une vitesse de soudage de 28 cm/min avec le gaz de protection susmentionné à un débit de 201/min. Les cordons de soudure ont été réalisés à l'aide de fils de diamètre 1.2 mm.

L'analyse chimique du métal déposé correspondant à chaque essai se trouve dans le Tableau 7. Les tableaux 12 et 13 ci-après donnent respectivement les valeurs de résiliences et de traction obtenus avec les 3 fils D à F de l'Exemple 2.

Les éprouvettes de résilience ont été prélevées comme dans l'Exemple 1.

Les éprouvettes de traction ont été prélevées dans le métal fondu conformément à la norme *AFNOR NF A 81-351.*

**Tableau 12**

| Etat brut de soudage Kv (Joules) @ -30°C | | | | |
|---|---|---|---|---|
| | Zones recuites | | Zones brutes | |
| | Mini | Moyenne | Mini | Moyenne |
| Fil D | 76 | 82 | 81 | 86 |
| Fil E | 81 | 86 | 66 | 79 |
| Fil F | 92 | 103 | 82 | 90 |

**Tableau 13**

| | Fil D | Fil E | Fil F |
|---|---|---|---|
| Résistance à la rupture Rm (Mpa) | 630 | 587 | 605 |
| Limite d'élasticité Rp 0.2 (Mpa) | 544 | 513 | 550 |
| Allongement (%) | 23 | 26 | 26 |
| Striction (%) | 73 | 75 | 72 |

On constate que l'ajout de calcium ne nuit en rien aux propriétés mécaniques de ces fils en comparaison avec des produits conventionnels n'en contenant pas.

Malgré la présence de calcium en quantité importante dans le fil fourré F, cet élément ne transfère que peu dans le métal déposé et il est possible de maintenir le même niveau de résilience à basse température qu'un produit conventionnel.

Il est à souligner par ailleurs qu'il convient de veiller à avoir une teneur en Mn inférieure à 2.90% dans le fil. En effet, le manganèse a un effet bénéfique sur la ténacité/résilience du joint soudé et surtout pour la trempabilité du métal soudé. Cependant, au-delà, un effet de durcissement néfaste apparaît en engendrant une dégradation de la ténacité. En d'autres termes, il faut rajouter la quantité de manganèse dans le fil pour maintenir sa teneur dans le métal déposé inférieure à 2%, de préférence moins de 1.9%.

Enfin, il est avantageux d'avoir une teneur en aluminium inférieure à 0.1% dans le fil pour des raisons analogues à celles susmentionnées pour le manganèse. De préférence, il convient d'avoir moins de 0.09% d'aluminium dans le fil, de manière à obtenir un métal déposé avec moins de 500 ppm d'aluminium, du fait du taux de transfert du fil au joint, avantageusement moins de 250 ppm d'aluminium dans le joint, voire même moins de 200 ppm.

En définitive, il ressort des Tableaux 7 et 8 que selon l'invention, les teneurs en aluminium, calcium et manganèse doivent être choisies avec soin dans les plages de valeurs sus décrites pour permettre l'obtention d'un métal déposé ou joint de soudure présentant de bonnes propriétés, notamment de résilience et, par ailleurs, une bonne fusion du fil et un taux de projections faible durant le soudage.

Le fil de l'invention est particulièrement bien adapté à la réalisation de joints de soudure pour assembler des pièces formant des parties de structures métalliques comme dans la construction de navires, de véhicules de transport automobile ou ferroviaire, la pose de pipelines en mer ou sur terre et partout où le soudage en position verticale descendante peut être utilisé.

## Revendications

1. Fil fourré de soudage sans laitier comprenant une enveloppe métallique externe et des éléments de remplissage contenus dans ladite enveloppe métallique, lesdits éléments de remplissage contenant du fer et représentant de 8 à 27 % de la masse totale du fil, **caractérisé en ce que** la quantité totale de calcium contenue dans le fil représente de 100 ppm à 0.14% de la masse totale du fil ou de 0.035 % à 1.8 % en poids de la masse des éléments de remplissage.

2. Fil selon la revendication 1, **caractérisé en ce que** la quantité totale de calcium contenue dans le fil représente moins de 1.7% en poids de la masse des éléments de remplissage et/ou de 500 ppm à 0.13% de la masse totale du fil, de préférence moins de 0 ,12% de la masse totale du fil.

3. Fil selon l'une des revendications 1 ou 2, **caractérisé en ce que** l'enveloppe métallique externe est formée d'au moins 90% en poids de fer.

4. Fil selon l'une des revendications 1 à 3, **caractérisé en ce que** le calcium est sous forme d'un ou plusieurs alliages métalliques et/ou sous forme minérale.

5. Fil selon l'une des revendications 1 à 4, **caractérisé en ce que** les éléments de remplissage représentent de 9 à 22 % de la masse totale du fil, de préférence de 10 à 20%.

6. Fil selon l'une des revendications 1 à 5, **caractérisé en ce que** les éléments de remplissage contiennent un ou plusieurs éléments choisis parmi la poudre de fer, les constituants d'éléments désoxydants, les éléments d'alliage et les agents stabilisateurs d'arc.

7. Fil selon l'une des revendications 1 à 6, **caractérisé en ce qu'**il contient de :
- 0.010 % à 0.25 % de carbone,
- 0.10 % à 1.85 % de silicium,
- 1 % à 2.9% de manganèse, de préférence moins de 2.8% de manganèse, de préférence encore moins de 2.7% de manganèse,
- 0.001% à 0.03% de soufre,
- 0.001 % à 0.1 % d'aluminium, de préférence moins de 0.09% d'aluminium,
- 0.001 % à 0.2 % de titane et/ou
- 1 à 150 ppm de bore.

8. Fil selon l'une des revendications 1 à 7, **caractérisé en ce qu'**il contient Si-Mn, Fe-Mn et/ou Fe-Si.

9. Fil selon l'une des revendications 1 à 8, **caractérisé en ce qu'**il contient du nickel, du chrome et/ou du molybdène.

10. Fil selon l'une des revendications 1 à 9, **caractérisé en ce qu'**il contient Na et/ou K.

11. Procédé de soudage à l'arc sous flux gazeux mettant en oeuvre un fil fourré à la polarité négative selon l'une des revendications 1 à 10, pour réaliser au moins un joint de soudure sur une ou plusieurs pièces à souder, de préférence le soudage est réalisé en position verticale descendante.

## Claims

1. Slag-free flux-cored welding wire comprising an external metal casing and filling elements contained in said metal casing, said filling elements containing iron and representing from 8 to 27% of the total mass of the wire, **characterized in that** the total amount of calcium contained in the wire represents from 100 ppm to 0.14% of the total mass of the wire or from 0.035% to 1.8% by weight of the mass of the filling elements.

2. Wire according to Claim 1, **characterized in that** the total amount of calcium contained in the wire represents less than 1.7% by weight of the mass of the filling elements and/or from 500 ppm to 0.13% of the total mass of the wire, preferably less than 0.12% of the total mass of the wire.

3. Wire according to either one of Claims 1 and 2, **characterized in that** the external metal casing is formed from at least 90% by iron weight.

4. Wire according to one of Claims 1 to 3, **characterized in that** the calcium is in the form of one or more metal alloys and/or in mineral form.

5. Wire according to one of Claims 1 to 4, **characterized in that** the filling elements represent from 9 to 22% of the total mass of the wire, preferably from 10% to 20%.

6. Wire according to one of Claims 1 to 5, **characterized in that** the filling elements contain one or more elements chosen from iron powder, constituents of deoxidizing elements, alloying elements and arc stabilizers.

7. Wire according to one of Claims 1 to 6, **characterized in that** it contains from:
- 0.010% to 0.25% carbon;
- 0.10% to 1.85% silicon;
- 1% to 2.9% manganese, preferably less than 2.8% manganese, more preferably less than 2.7% manganese;
- 0.001% to 0.03% sulphur;
- 0.001% to 0.1% aluminium, preferably less than 0.09% aluminium;
- 0.001% to 0.2% titanium; and/or
- 1 to 150 ppm boron.

8. Wire according to one of Claims 1 to 7, **characterized in that** it contains Si-Mn, Fe-Mn and/or Fe-Si.

9. Wire according to one of Claims 1 to 8, **characterized in that** it contains nickel, chromium and/or molybdenum.

10. Wire according to one of Claims 1 to 9, **characterized in that** it contains Na and/or K.

11. Method of gas shielded arc welding employing a negatively biased flux-cored wire, according to one of Claims 1 to 10, in order to produce at least one weld on one or more parts to be welded, the welding preferably being carried out by downhand position welding.

## Patentansprüche

1. Schlackenfreier Schweißfülldraht, der eine äußere Metallhülle und in der Metallhülle enthaltene Füllelemente aufweist, wobei die Füllelemente Eisen enthalten und 8 bis 27 % der Gesamtmasse des Drahts ausmachen, **dadurch gekennzeichnet, dass** die Gesamtmenge von Calcium, die in dem Draht enthalten ist, 100 ppm bis 0,14 % der Gesamtmasse des Drahts oder 0,035 Gew.-% bis 1,8 Gew.-% der Masse der Füllelemente ausmacht.

2. Draht nach Anspruch 1, **dadurch gekennzeichnet, dass** die Gesamtmenge von Calcium, die in dem Draht enthalten ist, weniger als 1,7 Gew.-% der Masse der Füllelemente und/oder 500 ppm bis 0,13 % der Gesamtmasse des Drahts, vorzugsweise weniger als 0,12 % der Gesamtmasse des Drahts, ausmacht.

3. Draht nach einem der Ansprüche 1 oder 2, **dadurch gekennzeichnet, dass** die äußere Metallhülle aus wenigstens 90 Gew.-% Eisen gebildet ist.

4. Draht nach einem der Ansprüche 1 bis 3, **dadurch gekennzeichnet, dass** das Calcium in Form einer oder mehrerer Metalllegierungen und/oder in mineralischer Form vorliegt.

5. Draht nach einem der Ansprüche 1 bis 4, **dadurch gekennzeichnet, dass** die Füllelemente 9 bis 22 % der Gesamtmasse des Drahts, vorzugsweise 10 bis 20 %, ausmachen.

6. Draht nach einem der Ansprüche 1 bis 5, **dadurch gekennzeichnet, dass** die Füllelemente ein oder mehrere Elemente enthalten, die aus Eisenpulver, Konstituenten desoxidierender Elemente, Legierungselementen und Lichtbogenstabilisierungsmitteln gewählt sind.

7. Draht nach einem der Ansprüche 1 bis 6, **dadurch gekennzeichnet, dass** er enthält:
- 0,010 % bis 0,25 % Kohlenstoff,
- 0,10 % bis 1,85 % Silicium,
- 1 % bis 2,9 % Mangan, vorzugsweise weniger als 2,8 % Mangan, stärker bevorzugt weniger als 2,7 % Mangan,
- 0,001 % bis 0,03 % Schwefel,
- 0,001 % bis 0,1 % Aluminium, vorzugsweise weniger als 0,09 % Aluminium,
- 0,001 % bis 0,2 % Titan und/oder
- 1 bis 150 ppm Bor.

8. Draht nach einem der Ansprüche 1 bis 7, **dadurch gekennzeichnet, dass** er Si-Mn, Fe-Mn und/oder Fe-Si enthält.

9. Draht nach einem der Ansprüche 1 bis 8, **dadurch gekennzeichnet, dass** er Nickel, Chrom und/oder Molybdän enthält.

10. Draht nach einem der Ansprüche 1 bis 9, **dadurch gekennzeichnet, dass** er Na und/oder K enthält.

11. Verfahren zum Lichtbogenschweißen in einer Gasströmung, das einen Fülldraht mit negativer Polarität nach einem der Ansprüche 1 bis 10 verwendet, um wenigstens eine Schweißverbindung an einem oder mehreren zu verschweißenden Teilen zu verwirklichen, wobei das Schweißen vorzugsweise in einer abfallenden vertikalen Stellung erfolgt.
